# FASCICULE DE BREVET EUROPEEN

(11) **EP 2 656 760 B1**
(45) Date de publication et mention de la délivrance du brevet: **22.07.2015**
(21) Numéro de dépôt: 13165009.5
(22) Date de dépôt: 23.04.2013
(51) Int. Cl.: A47J 43/046, A47J 43/25, A47J 43/07

(54) **Dispositif de découpe d'aliments comportant un espace de rangement**
Vorrichtung zum Schneiden von Lebensmitteln, die einen Ablageraum umfasst
Food-cutting device comprising a storage space

(30) Priorité: 26.04.2012 FR 1253886
(43) Date de publication de la demande: 30.10.2013
(73) Titulaire: SEB S.A., 69130 Ecully (FR)
(72) Inventeur: Bordes, Jean-Luc, 65100 Ade (FR); Senechal, Tony, 65100 Lourdes (FR); Buleon, M. Yannick, 65600 Semeac (FR)
(74) Mandataire: Cémeli, Eric Philippe Laurent

(56) Documents cités:
- EP-A2- 1 797 804
- WO-A1-02/34096
- FR-A1- 2 862 199
- US-A- 4 921 175

## Description

La présente invention concerne le domaine technique des appareils électroménagers de préparation culinaire à outils interchangeables prévus pour découper les aliments, notamment en tranches, en lamelles ou en copeaux.

La présente invention concerne plus particulièrement un dispositif de découpe d'aliments prévu pour entraîner en rotation au moins un accessoire rotatif de découpe d'aliments, notamment pour trancher et/ou râper et/ou émincer les aliments.

La présente invention concerne notamment, mais non exclusivement, un dispositif de découpe d'aliments prévu pour entraîner en rotation au moins un accessoire rotatif de découpe d'aliments de type disque.

Il est connu des documents FR 1 394 429, US 4 921 174 et US 4 921 175 des appareils de découpe d'aliments comportant un accessoire de découpe d'aliments à disque rotatif, le boitier de ces appareils étant prévu pour être tenu à la main. Un inconvénient de ces réalisations réside dans le fait qu'aucune disposition spécifique n'est prévue pour le rangement d'un autre accessoire.

Un objet de la présente invention est de proposer un dispositif de découpe d'aliments prévu pour entraîner en rotation au moins un accessoire rotatif de découpe d'aliments, qui présente une construction compacte permettant de recevoir un autre accessoire de découpe d'aliments.

Cet objet est atteint avec un dispositif de découpe d'aliments comportant un corps principal présentant un organe d'entraînement s'étendant dans une enceinte de travail prévue pour loger un accessoire rotatif de découpe d'aliments monté sur l'organe d'entraînement, du fait que le corps principal présente un espace de rangement prévu pour recevoir un autre accessoire de découpe d'aliments, que l'espace de rangement est agencé sur une face du corps principal opposée à l'enceinte de travail, que l'espace de rangement comporte au moins un organe de retenue prévu pour porter l'autre accessoire de découpe d'aliments, et que l'organe de retenue comporte au moins un crochet de retenue issu d'une languette élastique et/ou au moins un crochet de retenue monté mobile contre un élément de rappel élastique, le ou les crochets de retenue portant l'autre accessoire de découpe d'aliments. Ainsi l'autre accessoire de découpe d'aliments peut être porté par le crochet de retenue. Le crochet de retenue alors vient en prise avec l'autre accessoire de découpe d'aliments agencé dans l'espace de rangement. Par ailleurs, le crochet de retenue peut être déplacé pour libérer l'autre accessoire de découpe d'aliments. Cette disposition permet de minimiser la surface du corps principal tout en offrant un espace de rangement très accessible. L'espace de rangement peut notamment être agencé sur ou dans une face inférieure du corps principal, lorsque l'enceinte de travail est disposée au dessus du corps principal.

Avantageusement, l'espace de rangement présente une échancrure latérale prévue pour la saisie de l'autre accessoire de découpe d'aliments par ses deux faces opposées. Cette disposition favorise la préhension de l'autre accessoire de découpe d'aliments et permet de faciliter son retrait de l'espace de rangement.

Avantageusement encore, l'espace de rangement présente une ouverture inférieure prévue pour la mise en place de l'autre accessoire de découpe d'aliments sur l'organe de retenue. Ainsi l'autre accessoire de découpe d'aliments est facilement visible et accessible. En alternative, l'espace de rangement peut notamment présenter une ouverture latérale, l'organe de retenue pouvant être alors formé par une paroi inférieure de support délimitant l'espace de rangement.

Avantageusement encore, l'espace de rangement présente une paroi latérale inférieure entourant partiellement l'autre accessoire de découpe d'aliments porté par l'organe de retenue. L'espace de rangement forme ainsi un compartiment de rangement offrant une protection latérale pour l'autre accessoire de découpe d'aliments.

Avantageusement alors, le crochet de retenue est engagé dans un logement axial d'un noyau central de l'autre accessoire de découpe d'aliments. Cette disposition permet de simplifier le retrait de l'autre accessoire de découpe d'aliments.

Avantageusement alors, le logement axial est traversant. Cette disposition permet de faciliter la mise en place de l'autre accessoire de découpe d'aliments dans l'enceinte de travail.

Avantageusement encore, l'organe d'entraînement et l'autre accessoire de découpe d'aliments porté par l'organe de retenue sont alignés selon un même axe. Cette disposition permet de minimiser l'encombrement du corps principal, l'accessoire rotatif de découpe d'aliments et l'autre accessoire de découpe d'aliments pouvant être alignés sur le même axe de part et d'autre du corps principal.

Avantageusement encore, l'autre accessoire de découpe d'aliments peut être monté sur l'organe d'entraînement. Cette disposition permet de loger l'autre accessoire de découpe d'aliments dans l'enceinte de travail à la place de l'accessoire rotatif de découpe d'aliments. Cette disposition permet de plus d'envisager l'utilisation d'un accessoire rotatif de découpe d'aliments et d'un autre accessoire de découpe d'aliments susceptibles d'être montés de manière interchangeable sur l'organe d'entraînement. Toutefois l'autre accessoire de découpe d'aliments monté sur l'organe d'entraînement n'est pas nécessairement entraîné en rotation par l'organe d'entraînement.

Selon une forme de réalisation avantageuse, l'enceinte de travail comprend un couvercle présentant l'entrée d'aliments à découper.

Avantageusement alors, le couvercle est verrouillé sur le corps principal. En alternative, le couvercle pourrait notamment être verrouillé sur un récipient de travail porté par le corps principal.

Avantageusement encore, l'enceinte de travail comprend un réceptacle monté sur le corps principal. Cette disposition permet de faciliter le nettoyage de l'appareil.

Avantageusement alors, le réceptacle délimite avec le couvercle la sortie d'aliments découpés. Cette disposition permet de faciliter la construction de l'appareil.

Selon une forme de réalisation, le corps principal loge un moteur électrique prévu pour entraîner en rotation l'organe d'entraînement. En alternative, le corps principal pourrait notamment être monté, si désiré amovible, sur un boîtier logeant un moteur électrique relié à une transmission prévue pour entraîner en rotation l'organe d'entraînement.

Avantageusement encore, le corps principal présente une portion allongée prévue pour être tenue à la main.

L'invention sera mieux comprise à l'étude d'un exemple de réalisation, pris à titre nullement limitatif, illustré dans les figures annexées, dans lesquelles :
- la figure 1 est une vue en coupe longitudinale d'un appareil de découpe d'aliments formant un dispositif de découpe d'aliments selon l'invention,
- la figure 2 est une vue en perspective d'un corps principal présentant un organe d'entraînement, d'un réceptacle et d'un couvercle de l'appareil de découpe d'aliments illustré sur la figure 1,
- les figures 3a, 3b, 3c illustrent différents outils amovibles d'accessoire rotatif de découpe d'aliments,
- la figure 4 illustre un support de travail rotatif sur lequel peuvent être montés chacun des outils amovibles illustrés sur les figures 3a, 3b, 3c,
- la figure 5 est une vue de dessous du support de travail rotatif illustré sur la figure 4,
- la figure 6 montre l'outil amovible illustré sur la figure 3c monté sur le support de travail rotatif illustré sur les figures 4 et 5, pour former un accessoire rotatif de découpe d'aliments susceptible d'être mis en place sur l'organe d'entraînement illustré sur la figure 2,
- la figure 7 illustre un support de rangement prévu pour recevoir les outils amovibles d'accessoire rotatif de découpe d'aliments illustrés sur les figures 3a, 3b et 3c,
- la figure 8 montre le support de rangement d'outils illustré sur la figure 7, sur lequel sont montés les outils amovibles d'accessoire rotatif de découpe d'aliments illustrés sur les figures 3a, 3b et 3c,
- la figure 9 illustre le montage du support de rangement illustré sur les figures 7 et 8 et des outils amovibles d'accessoire rotatif de découpe d'aliments illustrés sur les figures 3a, 3b et 3c, sous le corps principal illustré sur les figures 1, 2 et 6.

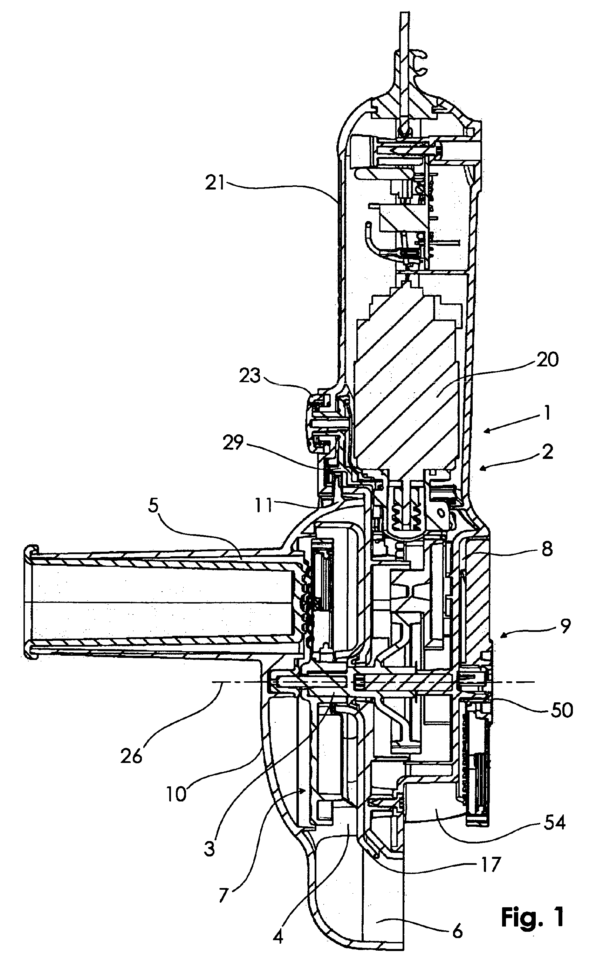

L'appareil électroménager de préparation culinaire illustré sur la figure 1 forme un dispositif de découpe d'aliments 1 comportant un corps principal 2 présentant un organe d'entraînement 3 s'étendant dans une enceinte de travail 4 prévue pour loger un accessoire rotatif de découpe d'aliments 7 monté sur l'organe d'entraînement 3. L'enceinte de travail 4 présente une entrée d'aliments à découper 5 débouchant en regard d'une surface de découpe de l'accessoire rotatif de découpe d'aliments 7 monté sur l'organe d'entraînement 3.

L'enceinte de travail 4 présente avantageusement une sortie d'aliments découpés 6. L'utilisateur peut ainsi recueillir les aliments découpés directement dans le récipient souhaité, par exemple un plat ou une assiette. Le dispositif de découpe d'aliments 1 peut ainsi être alimenté en continu par l'entrée d'aliments à découper 5. Tel que visible sur la figure 1, l'accessoire rotatif de découpe d'aliments 7 monté sur l'organe d'entraînement 3 est agencé dans l'enceinte de travail 4 entre l'entrée d'aliments à découper 5 et la sortie d'aliments découpés 6.

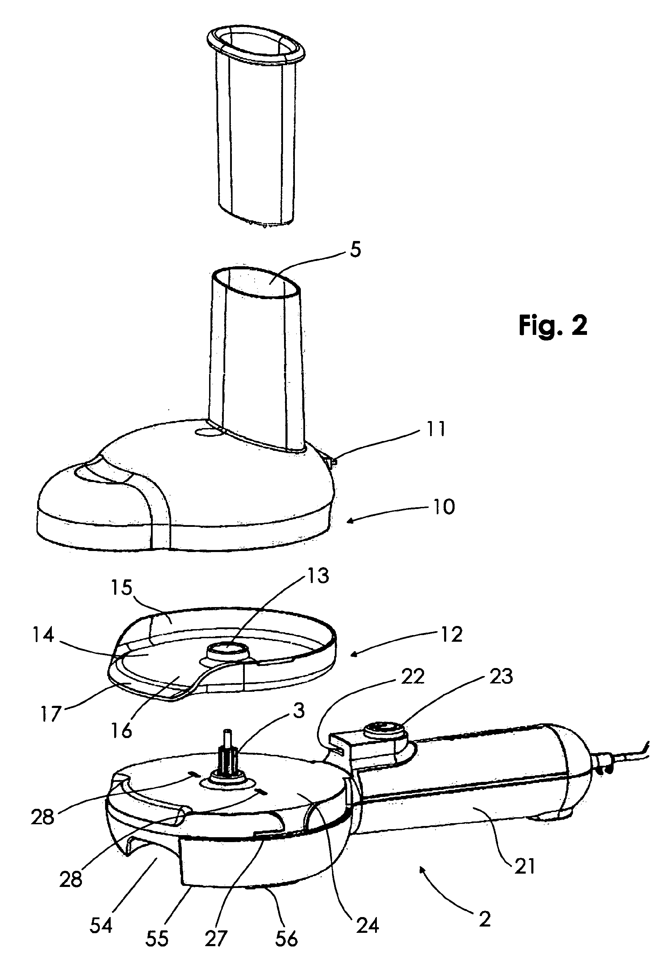

Dans l'exemple de réalisation illustré sur la figure 1, l'enceinte de travail 4 comprend un couvercle 10 présentant l'entrée d'aliments à découper 5. Le couvercle 10 est avantageusement réalisé en matériau transparent. Le couvercle 10 est verrouillé sur le corps principal 2. Tel que visible sur la figure 2, le corps principal 2 présente au moins une encoche 27 de verrouillage par baïonnette, prévue pour recevoir un ergot de verrouillage du couvercle 10 (non visible sur les figures). De préférence le corps principal 2 comporte deux encoches 27 opposées prévues chacune pour recevoir un ergot du couvercle 10.

Dans l'exemple de réalisation illustré sur les figures, l'enceinte de travail 4 comprend un réceptacle 12 monté sur le corps principal 2.

Tel que représenté sur la figure 2, le réceptacle 12 est avantageusement amovible par rapport au corps principal 2. Le réceptacle 12 est bloqué en rotation par rapport au corps principal 2. A cet effet le corps principal 2 présente deux logements 28 prévus pour recevoir chacun une protubérance inférieure (non visible sur les figures) du réceptacle 12. Le réceptacle 12 présente une cheminée centrale 13 prévue pour le passage de l'organe d'entraînement 3. Le réceptacle 12 délimite avec le couvercle 10 la sortie d'aliments découpés 6. Aussi le réceptacle 12 présente un fond 14 entouré par une bordure latérale 15 ménageant un passage latéral 16 prévu pour l'évacuation des aliments découpés. De préférence le fond 14 est prolongé par une paroi inclinée d'évacuation 17 s'étendant au dessus du corps principal 2, tel que visible sur la figure 1.

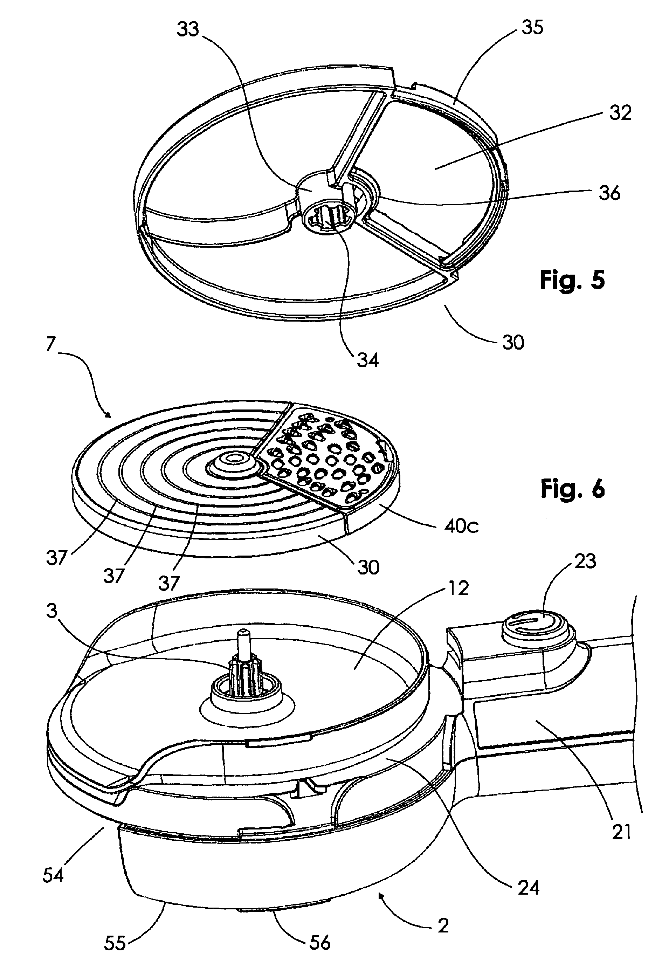

Par ailleurs, dans l'exemple de réalisation illustré sur la figure 1, le corps principal 2 loge un moteur électrique 20 prévu pour entraîner en rotation l'organe d'entraînement 3, par exemple par une transmission à engrenages. Le corps principal 2 présente une portion allongée 21 prévue pour être tenue à la main. La portion allongée 21 est adjacente à l'enceinte de travail 4. Le couvercle 10 présente un organe d'actionnement 11 prévu pour être engagé par rotation dans un logement latéral 22 du corps principal 2, tel que visible sur la figure 2. Le corps principal 2 porte un bouton de commande 23 prévu pour commander l'alimentation du moteur électrique 20. Lorsque le couvercle 10 est verrouillé sur le corps principal 2, l'organe d'actionnement 11 déverrouille une tige de commande 29 qui peut alors être poussée par le bouton de commande 23 pour actionner un interrupteur autorisant l'alimentation du moteur électrique 20. Le bouton de commande 23 est avantageusement agencé sur la portion allongée 21 du côté du couvercle 10, pour permettre un actionnement par le pouce de la main de l'utilisateur tenant le corps principal 2. Le corps principal 2 présente une portion circulaire 24 raccordée à la portion allongée 21. Le réceptacle 12 est monté amovible sur la partie supérieure de la portion circulaire 24, tel que représenté sur les figures 2 et 6.

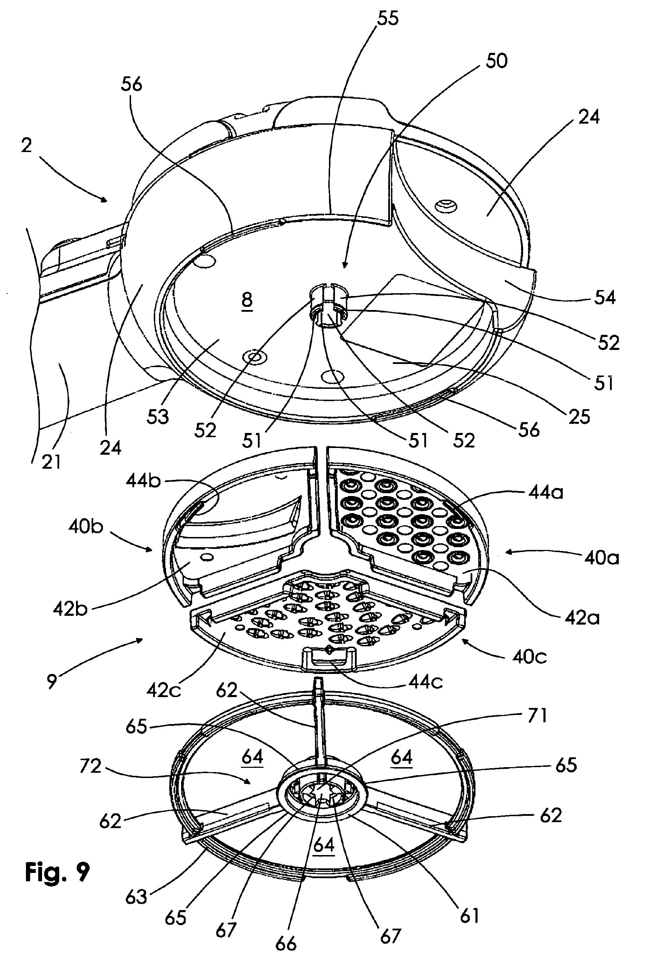

Tel que représenté sur la figure 1, le corps principal 2 présente un espace de rangement 8 prévu pour recevoir un autre accessoire de découpe d'aiiments 9. L'espace de rangement comporte au moins un organe de retenue 50 prévu pour porter l'autre accessoire de découpe d'aliments 9. L'espace de rangement 8 est agencé sur une face 25 du corps principal 2 opposée à l'enceinte de travail 4. Ainsi la face 25 est une face inférieure du corps principal 2, visible sur la figure 9. Plus particulièrement, l'espace de rangement 8 est agencé dans la partie inférieure de la portion circulaire 24.

Dans l'exemple de réalisation illustré sur les figures, l'organe de retenue 50 comporte trois crochets de retenue 51 appartenant chacun à une languette élastique 52 issue de la face 25 du corps principal 2.

L'espace de rangement 8 présente une ouverture inférieure 53, bien visible sur la figure 9, prévue pour la mise en place de l'autre accessoire de découpe d'aliments 9 sur l'organe de retenue 50, tel que représenté sur la figure 1.

Dans l'exemple de réalisation illustré sur les figures, l'espace de rangement 8 présente une échancrure latérale 54 prévue pour la saisie de l'autre accessoire de découpe d'aliments 9 par ses deux faces opposées. Plus particulièrement, l'échancrure latérale 54 est ménagée dans la partie inférieure de la portion circulaire 24 du corps principal 2.

Dans l'exemple de réalisation illustré sur les figures, l'espace de rangement 8 présente une paroi latérale inférieure 55 entourant partiellement l'autre accessoire de découpe d'aliments 9 porté par l'organe de retenue 50.

La paroi latérale inférieure 55 peut être utilisée comme support d'appui pour poser le corps principal 2 sur un support plan tel qu'une table. A cet effet le corps principal 2 peut comporter au moins deux conformations d'appui 56 agencées sur la paroi latérale inférieure 55 de part et d'autre de la portion circulaire 24.

Tel que visible sur la figure 1, l'accessoire rotatif de découpe d'aliments 7 monté sur l'organe d'entraînement 3 et l'autre accessoire de découpe d'aliments 9 porté par l'organe de retenue 50 sont alignés selon un même axe 26.

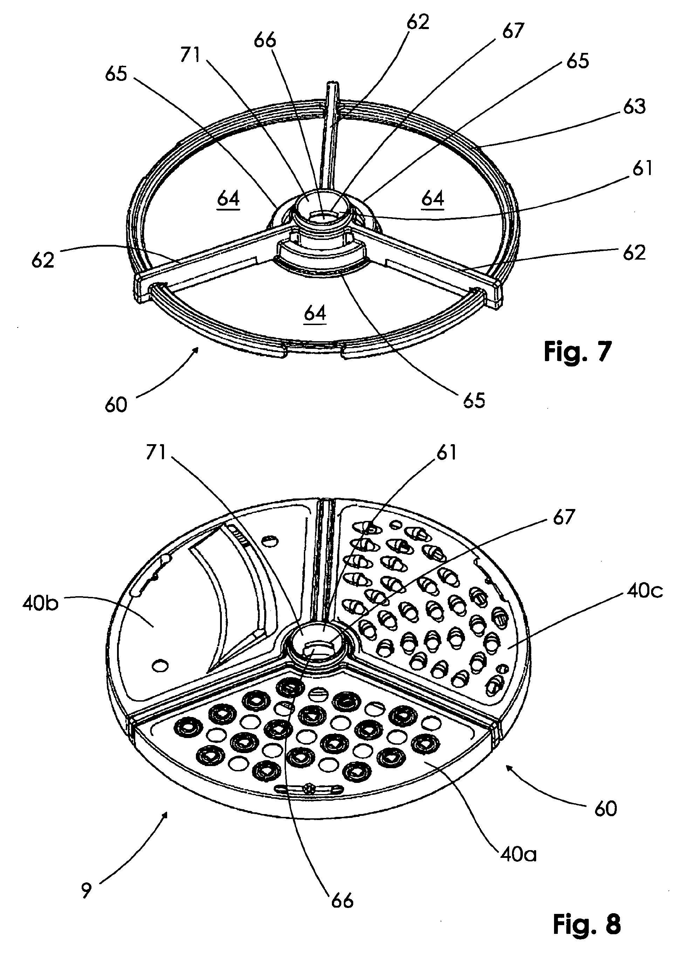

L'accessoire rotatif de découpe d'aliments 7 et l'autre accessoire de découpe d'aliments 9 présentent chacun deux faces opposées. De préférence l'accessoire rotatif de découpe d'aliments 7 et l'autre accessoire de découpe d'aliments 9 forment des disques, tel que représenté sur les figures 6 et 8.

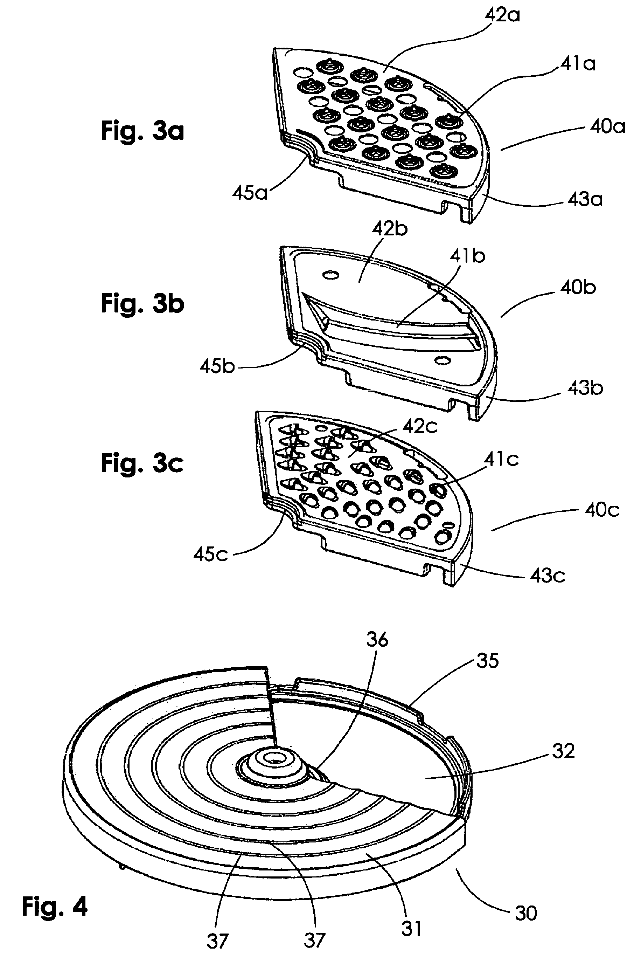

L'accessoire rotatif de découpe d'aliments 7 comprend un support de travail 30 illustré sur les figures 4, 5 et 6, ainsi qu'un outil amovible 40a, 40b ou 40c, illustré respectivement sur les figures 3a, 3b ou 3c.

Le support de travail 30 présente une forme de disque et comporte une surface d'appui 31 présentant une ouverture 32 prévue pour le montage de chacun des outils amovibles 40a, 40b, 40c.

L'ouverture 32 est adjacente à un moyeu central 33 portant un organe entraîneur 34 prévu pour venir en prise sur l'organe d'entraînement 3. L'ouverture 32 est délimitée par une portion de couronne périphérique 35.

Si désiré la surface d'appui 31 prévue pour porter et découper les aliments n'est pas nécessairement entièrement plane, et peut par exemple présenter des nervures concentriques 37.

Les outils amovibles 40a, 40b, 40c comportent au moins un organe de travail 41a, 41b, 41c ainsi que des moyens de retenue élastiques 44a, 44b, 44c, mieux visibles sur la figure 9, prévus pour venir en prise avec le support de travail 30. Dans une forme de réalisation préférée illustrée sur les figures, les outils amovibles 40a, 40b, 40c comportent un corps d'outil 43a, 43b, 43c en matière plastique surmoulé sur une pièce métallique 42a, 42b, 42c comportant le ou les organes de travail 41 a, 41 b, 41 c, les moyens de retenue élastiques 44a, 44b, 44c étant issus de la pièce métallique 42a, 42b, 42c. Le corps d'outil 43a, 43b, 43c forme un secteur radial présentant une encoche interne 45a, 45b, 45c prévue pour être engagée dans une nervure extérieure 36 présente sur le moyeu central 33 dans l'ouverture 32.

L'autre accessoire de découpe d'aliments 9 comprend un support de rangement 60 illustré sur les figures 7, 8 et 9, ainsi qu'au moins un des outils amovibles 40a, 40b, 40c, illustrés respectivement sur les figures 3a, 3b, 3c, et visibles également sur les figures 8 et 9.

Le support de rangement 60 présente une structure en forme de disque comportant une couronne périphérique 63 reliée à un noyau central 61 par trois bras 62. Les trois bras 62 délimitent avec la couronne périphérique 63 et le noyau central 61 trois ouvertures 64 de géométrie comparable à la géométrie de l'ouverture 32. Ainsi les trois outils amovibles 40a, 40b, 40c peuvent être montés simultanément sur le support de rangement 60, tel que représenté sur la figure 8. Le noyau central 61 présente sur sa périphérie à l'intérieur de chacune des ouvertures 64 une nervure extérieure 65 prévue pour le montage de l'un des outils amovibles 40a, 40b, 40c.

Le noyau central 61 présente un logement axial 66. Un organe d'accrochage 71 est agencé dans le logement axial 66. L'organe d'accrochage 71 est prévu pour coopérer avec l'organe de retenue 50. Tel que visible sur les figures 7, 8 et 9, l'organe d'accrochage 71 est formé par trois ergots de retenue internes 67. Ainsi l'organe d'accrochage 71 restreint la section libre du logement axial 66. Les ergots de retenue internes 67 sont prévus pour venir en prise avec les crochets de retenue 51 de l'organe de retenue 50, visibles sur la figure 9, lorsque le support de rangement 60 est monté sur l'organe de retenue 50.

Dans l'exemple de réalisation illustré sur les figures, le logement axial 66 du noyau central 61 loge l'organe d'entraînement 3. Le logement axial 66 permet ainsi le montage du support de rangement 60 sur l'organe d'entraînement 3. Ainsi le support de rangement 60 peut être monté dans l'enceinte de travail 4 en remplacement de l'accessoire rotatif de découpe d'aliments 7.

De préférence le logement axial 66 est dépourvu de surface d'entraînement susceptible de venir en prise avec l'organe d'entraînement 3. L'organe d'accrochage 71 est dimensionné pour laisser un passage libre à l'organe d'entraînement 3. Ainsi l'autre accessoire de découpe d'aliments 9 monté sur l'organe d'entraînement 3 n'est pas entraîné en rotation par l'organe d'entraînement 3.

Plus particulièrement, le logement axial 66 forme un passage traversant. Avantageusement, les ergots de retenue internes 67 sont agencés dans la partie centrale du logement axial 66, de sorte que le support de rangement 60 peut être monté sur l'organe de retenue 50 ou sur l'organe d'entraînement 3 dans un sens ou dans l'autre. Ainsi les trois outils amovibles 40a, 40b, 40c montés sur le support de rangement 60 en place dans l'enceinte de travail 4 peuvent être visibles par le couvercle 10 transparent.

Les nervures extérieures 65 peuvent également former un organe de préhension 72 facilitant la manipulation du support de rangement 60. Notamment, lorsque les outils amovibles 40a, 40b, 40c sont disposés entre le corps principal 2 et le support de rangement 60, tel que représenté sur la figure 9, l'organe de préhension 72 permet une mise en place et un retrait aisés du support de rangement 60.

Le fonctionnement de la présente invention est le suivant.

L'utilisateur peut ranger dans l'espace de rangement 8 le support de rangement 60 portant les deux outils amovibles non utilisés, l'autre outil amovible étant monté sur le support de travail 30 en place sur l'organe d'entraînement 3 pour réaliser la préparation souhaitée.

La mise en place de l'autre accessoire de découpe d'aliments 9 dans l'espace de rangement 8 peut être effectuée en insérant l'organe de retenue 50 dans le noyau central 61. L'autre accessoire de découpe d'aliments 9 est en place dans l'espace de rangement 8, tel que représenté sur la figure 1, les crochets de retenue 51 sont engagés dans le logement axial 66 du noyau central 61. Ainsi les crochets de retenue 51 portent l'autre accessoire de découpe d'aliments 9. L'organe de retenue 50 permet de déplacer le corps principal 2 portant l'autre accessoire de découpe d'aliments 9 sans risque de chute de celui-ci.

Le retrait de l'autre accessoire de découpe d'aliments 9 de l'espace de rangement 8 peut être effectué aisément grâce à l'échancrure latérale 54 et à l'ouverture inférieure 53. Le rapprochement des languettes élastiques 52 permet de dégager les ergots de retenue internes 67 du noyau central 61.

Par ailleurs le logement axial 66 du noyau central 61 formant un passage traversant permet le montage du support de rangement 60 sur l'organe d'entraînement 3 à l'intérieur de l'enceinte de travail 4. Ainsi l'autre accessoire de découpe d'aliments 9 peut être monté sur l'organe d'entraînement 3 à la place de l'accessoire rotatif de découpe d'aliments 7. L'absence de dispositif d'entraînement en rotation sur le noyau central 61 du support de rangement 60 permet d'envisager une structure beaucoup plus légère pour ledit support de rangement 60.

A titre de variante, l'accessoire rotatif de découpe d'aliments 7 et l'autre accessoire de découpe d'aliments 9 ne présentent pas nécessairement une forme de disque et peuvent notamment être concaves ou convexes, de préférence avec un angle inférieur ou égal à 30° par rapport au plan perpendiculaire à l'axe 26. La géométrie et les dimensions de l'enceinte de travail 4 et de l'espace de rangement 8 sont alors adaptées en conséquence.

A titre de variante, l'accessoire rotatif de découpe d'aliments 7 ne comporte pas nécessairement un support de travail 30 portant un outil amovible, et/ou l'autre accessoire de découpe d'aliments 9 ne comporte pas nécessairement un support de rangement 60 prévu pour porter plusieurs outils amovibles. Si désiré, l'autre accessoire de découpe d'aliments 9 peut comporter un moyeu central prévu pour être monté sur l'organe d'entraînement 3 et être utilisé à la place de l'accessoire rotatif de découpe d'aliments 7. Si désiré, l'accessoire rotatif de découpe d'aliments 7 et/ou l'autre accessoire de découpe d'aliments 9 peuvent être réversibles.

A titre de variante, l'espace de rangement 8 peut comporter au moins un organe de retenue 50 prévu pour porter l'autre accessoire de découpe d'aliments 9, le ou les organes de retenue 50 n'étant pas nécessairement agencés en position centrale par rapport à l'axe 26.

A titre de variante, l'organe de retenue 50 peut comporter au moins un crochet de retenue, toutefois le ou les crochets de retenue ne sont pas nécessairement issus d'une languette élastique. Notamment, le ou au moins l'un des crochets de retenue peut être monté mobile contre un élément de rappel élastique.

A titre de variante, l'organe de retenue ne comporte pas nécessairement au moins un crochet de retenue. Notamment, l'organe de retenue peut être formé par au moins une paroi inférieure de support ménageant un accès latéral à l'espace de rangement.

A titre de variante, l'espace de rangement ne présente pas nécessairement une ouverture inférieure prévue pour la mise en place de l'autre accessoire de découpe d'aliments sur l'organe de retenue. Notamment, l'espace de rangement peut présenter une ouverture latérale, l'organe de retenue pouvant être alors formé par une paroi inférieure de support délimitant l'espace de rangement.

A titre de variante, le corps principal ne loge pas nécessairement un moteur électrique prévu pour entraîner en rotation l'organe d'entraînement. Notamment, le corps principal pourrait être monté, si désiré amovible, sur un boîtier logeant un moteur électrique relié à une transmission prévue pour entraîner en rotation l'organe d'entraînement.

A titre de variante, l'enceinte de travail 4 ne comporte pas nécessairement une sortie d'aliments découpés 6.

A titre de variante, l'enceinte de travail 4 peut comporter au moins une autre sortie d'aliments découpés.

A titre de variante, l'enceinte de travail 4 peut comporter au moins une autre entrée d'aliments à découper.

La présente invention n'est nullement limitée à l'exemple de réalisation décrit et à ses variantes, mais englobe de nombreuses modifications dans le cadre des revendications.

## Revendications

1. Dispositif de découpe d'aliments (1) comportant un corps principal (2) présentant un organe d'entraînement (3) s'étendant dans une enceinte de travail (4) prévue pour loger un accessoire rotatif de découpe d'aliments (7) monté sur l'organe d'entraînement (3), **caractérisé en ce que** le corps principal (2) présente un espace de rangement (8) prévu pour recevoir un autre accessoire de découpe d'aliments (9), **en ce que** l'espace de rangement (8) est agencé sur une face (25) du corps principal (2) opposée à l'enceinte de travail (4), **en ce que** l'espace de rangement (8) comporte au moins un organe de retenue (50) prévu pour porter l'autre accessoire de découpe d'aliments (9), et **en ce que** l'organe de retenue (50) comporte au moins un crochet de retenue (51) issu d'une languette élastique (52) et/ou au moins un crochet de retenue monté mobile contre un élément de rappel élastique, le ou les crochets de retenue (51) portant l'autre accessoire de découpe d'aliments (9).

2. Dispositif de découpe d'aliments selon la revendication 1, **caractérisé en ce que** l'espace de rangement (8) présente une échancrure latérale (54) prévue pour la saisie de l'autre accessoire de découpe d'aliments (9) par ses deux faces opposées.

3. Dispositif de découpe d'aliments selon l'une des revendications 1 ou 2, **caractérisé en ce que** l'espace de rangement (8) présente une ouverture inférieure (53) prévue pour la mise en place de l'autre accessoire de découpe d'aliments (9) sur l'organe de retenue (50).

4. Dispositif de découpe d'aliments selon l'une des revendications 1 à 3, **caractérisé en ce que** l'espace de rangement (8) présente une paroi latérale inférieure (55) entourant partiellement l'autre accessoire de découpe d'aliments (9) porté par l'organe de retenue (50).

5. Dispositif de découpe d'aliments selon l'une des revendications 1 à 4, **caractérisé en ce que** le crochet de retenue (51) est engagé dans un logement axial (66) d'un noyau central (61) de l'autre accessoire de découpe d'aliments (9).

6. Dispositif de découpe d'aliments selon la revendication 5, **caractérisé en ce que** le logement axial (66) est traversant.

7. Dispositif de découpe d'aliments selon l'une des revendications 1 à 6, **caractérisé en ce que** l'organe d'entraînement (3) et l'autre accessoire de découpe d'aliments (9) porté par l'organe de retenue (50) sont alignés selon un même axe (26).

8. Dispositif de découpe d'aliments selon l'une des revendications 1 à 7, **caractérisé en ce que** l'autre accessoire de découpe d'aliments (9) peut être monté sur l'organe d'entraînement (3).

9. Dispositif de découpe d'aliments selon l'une des revendications 1 à 8, **caractérisé en ce que** l'enceinte de travail (4) comprend un couvercle (10) présentant une entrée d'aliments à découper (5).

10. Dispositif de découpe d'aliments selon la revendication 9, **caractérisé en ce que** le couvercle (10) est verrouillé sur le corps principal (2).

11. Dispositif de découpe d'aliments selon l'une des revendications 9 ou 10, **caractérisé en ce que** l'enceinte de travail (4) comprend un réceptacle (12) monté sur le corps principal (2).

12. Dispositif de découpe d'aliments selon la revendication 11, **caractérisé en ce que** le réceptacle (12) délimite avec le couvercle (10) une sortie d'aliments découpés (6).

13. Dispositif de découpe d'aliments selon l'une des revendications 1 à 12, **caractérisé en ce que** le corps principal (2) loge un moteur électrique (20) prévu pour entraîner en rotation l'organe d'entraînement (3).

14. Dispositif de découpe d'aliments selon l'une des revendications 1 à 13, **caractérisé en ce que** le corps principal (2) présente une portion allongée (21) prévue pour être tenue à la main.

## Patentansprüche

1. Gerät zum Zerkleinern von Lebensmitteln (1) mit einem Hauptkörper (2), der ein Antriebselement (3) aufweist, welches in einem Arbeitsraum (4) angeordnet ist, der für die Aufnahme eines rotierenden Zubehörs zum Zerkleinern von Lebensmitteln (7) vorgesehen ist, welches an dem Antriebselement (3) montiert wird, **dadurch gekennzeichnet, dass** der Hauptkörper (2) einen Stauraum (8) aufweist, der für die Aufnahme eines weiteren Zubehörs zum Zerkleinern von Lebensmitteln (9) vorgesehen ist, dass der Stauraum (8) an einer dem Arbeitsraum (4) gegenüberliegenden Seite (25) des Hauptkörpers (2) angeordnet ist und dass der Stauraum (8) mindestens ein Rückhalteelement (50) aufweist, das als Stütze des weiteren Zubehörs zum Zerkleinern von Lebensmitteln (9) vorgesehen ist, und **dadurch gekennzeichnet, dass** das Rückhalteelement (50) mit mindestens einem aus einer elastischen Lasche (52) hervorgehenden Rückhaltehaken (51) und/oder mit mindestens einem mobil an einem elastischen Rückstellelement gelagerten Rückhaltehaken versehen ist, wobei der bzw. die Rückhaltehaken (51) als Stütze für das weitere Zubehör zum Zerkleinern von Lebensmitteln (9) wirkt bzw. wirken.

2. Gerät zum Zerkleinern von Lebensmitteln nach Anspruch 1, **dadurch gekennzeichnet, dass** der Stauraum (8) eine seitliche Aussparung (54) aufweist, die für das Eingreifen des weiteren Zubehörs zum Zerkleinern von Lebensmitteln (9) mit seinen einander gegenüberliegenden Seitenflächen vorgesehen ist.

3. Gerät zum Zerkleinern von Lebensmitteln nach einem der Ansprüche 1 oder 2, **dadurch gekennzeichnet, dass** der Stauraum (8) eine innen liegende Öffnung (53) aufweist, die für das Einsetzen des weiteren Zubehörs zum Zerkleinern von Lebensmitteln (9) in das Rückhalteelement (50) vorgesehen ist.

4. Gerät zum Zerkleinern von Lebensmitteln nach einem der Ansprüche 1 bis 3, **dadurch gekennzeichnet, dass** der Stauraum (8) eine innen liegende Seitenwand (55) aufweist, die das von dem Rückhalteelement (50) getragene weitere Zubehör zum Zerkleinern von Lebensmitteln (9) teilweise umschließt.

5. Gerät zum Zerkleinern von Lebensmitteln nach einem der Ansprüche 1 bis 4, **dadurch gekennzeichnet, dass** der Rückhaltehaken (51) in einer axialen Kammer (66) eines zentral angeordneten Kernstücks (61) des weiteren Zubehörs zum Zerkleinern von Lebensmitteln (9) einrastet.

6. Gerät zum Zerkleinern von Lebensmitteln nach Anspruch 5, **dadurch gekennzeichnet, dass** die axiale Kammer (66) durchgehend gestaltet ist.

7. Gerät zum Zerkleinern von Lebensmitteln nach einem der Ansprüche 1 bis 6, **dadurch gekennzeichnet, dass** das Antriebselement (3) und das von dem Rückhalteelement (50) getragene weitere Zubehör zum Zerkleinern von Lebensmitteln (9) an der gleichen Achse (26) ausgerichtet werden.

8. Gerät zum Zerkleinern von Lebensmitteln nach einem der Ansprüche 1 bis 7, **dadurch gekennzeichnet, dass** das weitere Zubehör zum Zerkleinern von Lebensmitteln (9) an dem Antriebselement (9) montiert werden kann.

9. Gerät zum Zerkleinern von Lebensmitteln nach einem der Ansprüche 1 bis 8, **dadurch gekennzeichnet, dass** der Arbeitsraum (4) einen Deckel (10) umfasst, der eine Zuführung für zu zerkleinernde Lebensmittel (5) aufweist.

10. Gerät zum Zerkleinern von Lebensmitteln nach Anspruch 9, **dadurch gekennzeichnet, dass** der Deckel (10) am Hauptkörper (2) verriegelt wird.

11. Gerät zum Zerkleinern von Lebensmitteln nach einem der Ansprüche 9 oder 10, **dadurch gekennzeichnet, dass** der Arbeitsraum (4) einen Behälter (12) aufweist, der am Hauptkörper (2) montiert ist.

12. Gerät zum Zerkleinern von Lebensmitteln nach Anspruch 11, **dadurch gekennzeichnet, dass** der Behälter (12) zusammen mit dem Deckel (10) einen Auslass für zerkleinerte Lebensmittel (6) begrenzt.

13. Gerät zum Zerkleinern von Lebensmitteln nach einem der Ansprüche 1 bis 12, **dadurch gekennzeichnet, dass** in dem Hauptkörper (2) ein Elektromotor (20) untergebracht ist, der dafür vorgesehen ist, das Antriebselement (3) in Drehung zu versetzen.

14. Gerät zum Zerkleinern von Lebensmitteln nach einem der Ansprüche 1 bis 13, **dadurch gekennzeichnet, dass** der Hauptkörper (2) einen länglichen Abschnitt (21) aufweist, der dazu bestimmt ist, in der Hand gehalten zu werden.

## Claims

1. Appliance for cutting food (1) consisting of a main body (2) with a drive member (3) extending into a working chamber (4) intended to accommodate a rotating accessory to cut food (7) mounted on the drive member (3), **characterised by** the fact that the main body (2) offers storage space (8) intended for another accessory for cutting food (9), in that the storage space (8) is arranged on one side (25) of the main body (2) opposite the working chamber (4), in that the storage space (8) includes at least one retaining member (50) intending to store the other accessory for cutting food (9), and in that the retaining member (50) comprises at least one holding hook (51) from an elastic tongue (52) and/or at least one holding hook movably mounted against an elastic return, the holding hook(s) (51) carrying the other accessory to cut food (9).

2. Appliance for cutting food according to claim 1, **characterised in that** the storage element (8) has a lateral recess (54) intended to hold the other accessory to cut food (9) by the two opposite faces.

3. Appliance for cutting food according to one of the claims 1 or 2, **characterised in** the storage space (8) has a lower opening (53) intended for the placement of the other accessory for cutting food (9) on the retaining member (50).

4. Appliance for cutting food according to one of the claims 1 to 3, **characterised in that** the storage area (8) has a lower side wall (55) partially surrounding the other accessory for cutting food (9) carried by the retaining member (50).

5. Appliance for cutting food according to one of the claims 1 to 4, **characterised in that** the retaining hook (51) retained in an axial housing (66) of a central core (61) in the other accessory for cutting food (9).

6. Appliance for cutting food according to the claim 5, **characterised in that** the axial housing (66) has throughway.

7. Appliance for cutting food according to one of the claims 1 to 6, **characterised in that** the drive member (3) and the other accessory for cutting food (9) carried by the retaining member (50) are aligned along the same axis (26).

8. Appliance for cutting food according to one of claims 1 to 7, **characterised in that** the other accessory for cutting food (9) can be mounted on the drive member (3).

9. Appliance for cutting food according to one of the claims 1 to 8, **characterised in that** the working chamber (4) comprises a lid (10) with an entry for the food to be cut (5).

10. Appliance for cutting food according to claim 9, **characterised in that** the lid (10) is locked to the main body (2).

11. Appliance for cutting food according to one of the claims 9 or 10, **characterised in that** the working chamber (4) comprises a receptacle (12) mounted on the main body (2).

12. Appliance for cutting food according to claim 11, **characterised in that** the receptacle (12) defines with the lid (10) an exit for cut food (6).

13. Appliance for cutting food according to one of the claims 1 to 12, **characterised in that** the main body (2) accommodates an electric motor (20) intended to rotate the drive member (3).

14. Appliance for cutting food according to one of the claims 1 to 13, **characterised in that** the main body (2) has a longer part (21) designed to be held in the hand.
